# EUROPÄISCHE PATENTSCHRIFT

(11) **EP 1 437 249 B1**
(45) Veröffentlichungstag und Bekanntmachung des Hinweises auf die Patenterteilung: **07.12.2005**
(21) Anmeldenummer: 03029349.2
(22) Anmeldetag: 19.12.2003
(51) Int. Cl.: B60J 7/185

(54) **Verdeckverschluss eines Fahrzeugs**
Latching device for a vehicle roof
Dispositif de verrouillage pour toit de véhicule

(30) Priorität: 13.01.2003 DE 10300882
(43) Veröffentlichungstag der Anmeldung: 14.07.2004
(73) Patentinhaber: Gross, Beatrix, 70469 Stuttgart (DE); Dr.Ing. h.c.F. Porsche Aktiengesellschaft, 70435 Stuttgart (DE)
(72) Erfinder: Homann, Bodo, 71296 Heimsheim (DE); Schmidt, Horst, 70469 Stuttgart (DE); Küstner, Markus, 71636 Ludwigsburg (DE); Schneider, Thomas, 73728 Esslingen (DE)
(74) Vertreter: Kohler Schmid Möbus

(56) Entgegenhaltungen:
- DE-A- 10 000 002
- DE-A- 10 105 771
- DE-A- 19 721 229
- DE-C- 19 533 802
- US-A- 5 284 378

## Beschreibung

Die vorliegende Erfindung betrifft einen Verdeckverschluss eines Fahrzeugs mit einem Verschlusshaken, der in einem - im Querschnitt gesehen vorzugsweise U-förmigen - Kulissenblech über Führungsmittel aus einer Schließstellung in eine Offenstellung auf einer definierten Bahn beweglich angeordnet ist, wobei ein Getriebemotor zum Verschwenken eines Antriebshebel vorgesehen ist, der mit dem Verschlusshaken in Verbindung steht, wobei die Verbindung des Verschlusshakens mit dem Antriebshebel durch mehrere gelenkig miteinander verbundene Hebel ausgebildet ist.

Ein derartiger Verdeckverschluss ist beispielsweise durch die DE 100 00 002 A1 bekannt geworden.

Verdeckverschlüsse mit Getriebemotor werden zum automatischen Schließen und Öffnen des Verdecks von Cabrios eingesetzt. Die bekannte Führung des Verschlusshakens in dem Kulissenblechs ermöglicht eine definierte motorische Bewegung des Verschlusshakens mit Hilfe des Getriebemotors. Der Verdeckverschluss weist eine kompakte Anordnung auf, damit eine platzsparende Bauweise erreicht wird.

Der Erfindung liegt die Aufgabe zugrunde, einen motorgetrieben Verdeckverschluss mit einer kompakten platzsparenden Bauweise derart weiterzubilden, dass die Führung des Verschlusshakens verbessert wird.

Diese Aufgabe wird durch einen Verdeckverschluss gemäß Patentanspruch 1 gelöst. Durch den Einsatz zweier beidseitig angeordneter Hebel ist gewährleistet, dass der Verschlusshaken stets in der Mitte der Kulisse gehalten wird und die Kräfte auf zwei Kniehebelanordnungen verteilt werden. Die Stabilität der Verbindung und die Möglichkeiten der Kraftübertragung werden verbessert.

In weiterer Ausgestaltung der Erfindung weist das Kulissenblech zwei sich im wesentlichen in Längsrichtung des Verschlusshakens erstreckende Ausnehmungen zur Ausbildung von Kulissenbahnen auf, deren eine zur Führung des Führungsstiftes und deren andere zur Führung und Lagerung des Führungsbolzens am dem Windschutzscheibenrahmen abgewandten Ende des Verdeckverschlusses vorgesehen ist. Die Verwendung zweier Kulissenbahnen sorgt für eine präzise Bewegung des Verschlusshakens.

Bei einer bevorzugten Ausführung ist der erste Hebel seitlich außerhalb des Kulissenblechs angeordnet und zum einen mit dem Verschlusshaken und zum anderen mit dem ebenfalls seitlich außerhalb des Kulissenblechs angeordneten zweiten Hebel verbunden, wobei der zweite Hebel wiederum über den dritten Hebel mit dem Antriebshebel verbunden ist. Während der Verschlusshaken innerhalb des Kulissenblechs geführt ist, sind die Mittel zum Auslenken des Verschlusshakens außerhalb des Kulissenblechs angeordnet. Dies wirkt sich günstig auf den erforderlichen Bauraum aus.

Zur Abschaltung des Verdeckverschlusses ist es vorgesehen, dass die ersten und/oder zweiten Hebel Absätze (Anschläge) zur Betätigung vom Mikroschaltern einer Endabschaltung des Verdeckverschlusses in der Offenstellung bzw. in der Schließstellung aufweisen. Mittel zum Auslösen der Endabschaltung sind in die Hebel integriert und somit automatisch an die Bewegung der Hebel gekoppelt. Die weiteren Elemente der Endabschaltung, beispielsweise die Mikroschalter, sind auf einer Platine untergebracht, die sämtliche Elemente der Endabschaltung trägt.

Zur Betätigung des Verdeckverschlusses bei defektem Getriebemotor mit einem Schneckengetriebe ist es vorgesehen, dass das Gehäuse des Verdeckverschlusses eine Öffnung zur manuellen Betätigung des Schneckengetriebes mit einem Werkzeug umfasst. Beispielsweise kann das Schneckengetriebe eine Innensechskant-Bohrung aufweisen, so dass das Schneckengetriebe mit einem Inbusschlüssel leicht angetrieben werden kann.

Ein bevorzugtes Ausführungsbeispiel der Erfindung ist in der schematischen, nicht notwendigerweise maßstäblich zu verstehenden Zeichnung dargestellt und wird nachfolgend anhand der Figuren näher erläutert. Es zeigt:
- **Fig. 1**: eine Draufsicht auf einen Verdeckverschluss, wobei der Verschlusshaken seine Schließstellung einnimmt;
- **Fig. 2**: einen Schnitt nach der Linie 11-11 der Fig. 1; 30
- **Fig. 3**: einen Schnitt nach der Linie 111-111 der Fig.1;

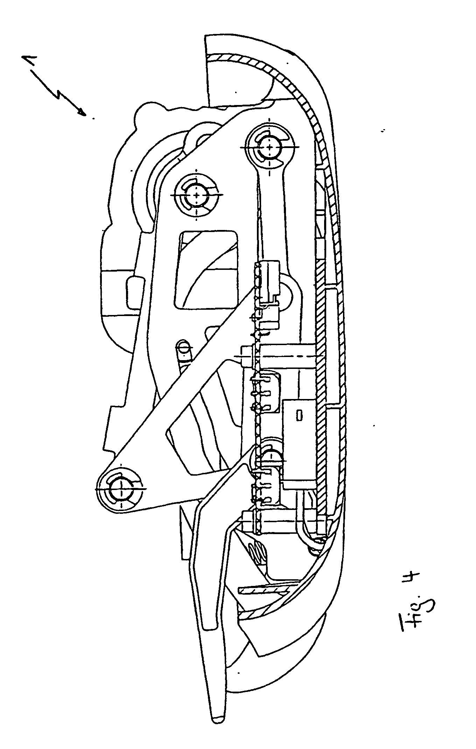

- **Fig. 4**: einen Schnitt nach der Linie IV-IV der Fig. 1;
- **Fig. 5**: einen Schnitt nach der Linie V-V der Fig. 1;
- **Fig. 6**: eine perspektivische Ansicht des dem Verdeck zugewandten Bereichs des Verdeckverschlusses;
- **Fig. 7**: eine Ansicht der Unterseite des Verdeckverschlusses, wobei der Gehäusedeckel nicht dargestellt ist;
- **Fig. 8**: eine Frontansicht des Verdeckverschlusses;
- **Fig. 9**: die Bewegung des Verschlusshakens von der Schließstellung in die Offenstellung;
- **Fig. 10**: die Offenstellung des Verschlusshakens.

### Beschreibung des Ausführungsbeispiels

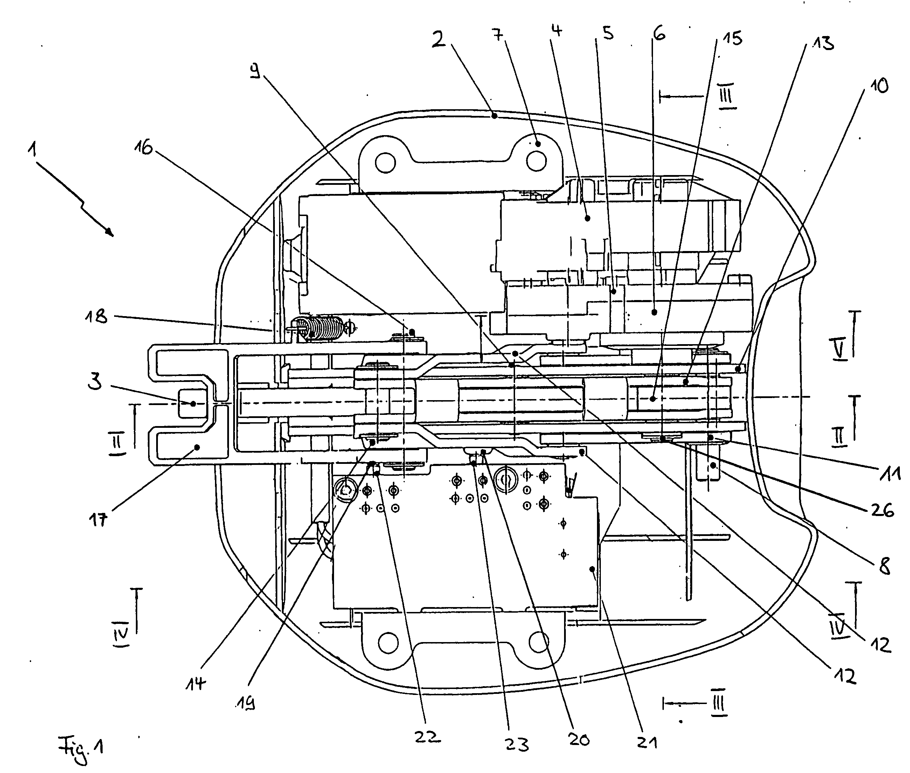

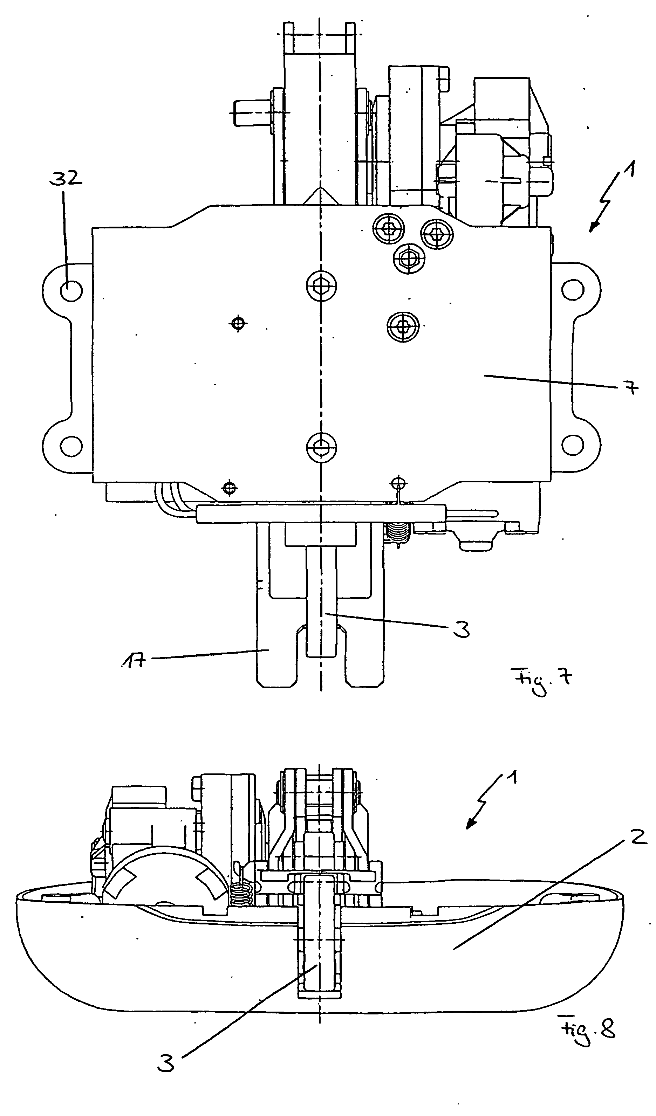

Ein Verdeck eines Personenkraftwagens kann mittels eines Verdeckverschlusses **1** durch die lösbare Befestigung an einem Windschutzscheibenrahmen geschlossen werden. Aus den **Fign. 1** und **6** ist der wesentliche Aufbau des Verdeckverschlusses 1 ersichtlich. Der Verdeckverschluss **1** umfasst ein an der Unterseite des formsteifen vorderen Verdeckrahmens befestigbares Gehäuse **2**, einen in seiner Verriegelungsstellung mit einem Windschutzscheibenrahmen in Wirkverbindung stehenden Verschlusshaken **3** sowie einen Getriebemotor **4** mit einem Getriebegehäuse **5, 6** zur Bewegung des Verschlusshakens **3** von der Schließstellung in die Offenstellung bzw. umgekehrt. Fig. 6 zeigt die an der Unterseite des Verdeckrahmens zu befestigende Oberseite des Verdeckverschlusses **1**. Mit Hilfe des Verdeckverschlusses **1** wird das Verdeck in Längsrichtung des Personenkraftwagens gegen den Windschutzscheibenrahmen gezogen und in der gespannten Verdeckstellung gehalten. Über ein Trägerblech **7** kann der Verdeckverschluss **1** an dem Verdeckrahmen ortsfest fixiert werden.

Der Verschlusshaken **3** ist an seinem dem Windschutzscheibenrahmen abgewandten Ende mittels- eines Führungsbolzens **8** und eines Führungsstiftes **9** verschieblich gelagert, die in Ausnehmungen eines Kulissenblechs **10** eingesetzt sind. Der Verschlusshaken **3** kann innerhalb des Kulissenblechs **10** ausgelenkt werden. Durch die Gestaltung der Ausnehmungen wird eine definierte Bewegung des Verschlusshakens **3** vorgegeben. Weiterhin ist der Verschlusshaken **3** über erste Hebel **11** und zweite beidseitig angeordnete, dreieckförmige Hebel **12** und einen dritten, mittig angeordneten Hebel **13** (Achse **14**) mit einem Antriebshebel gelenkig verbunden, der die Bewegung des Verschlusshakens **3** steuert. Der zweite Hebel **12** ist wiederum über eine Achse **16** drehbar gelagert. Zur Bewegung des Verschlusshakens **3** wird der Antriebshebel **15** mittels einer durch den Getriebemotor **4** antreibbaren Antriebswelle bewegt, so dass sich in Folge die gelenkig verbundenen Hebel **11, 12** und **13** zum Windschutzscheibenrahmen hin geführt verschieben und den Verschlusshaken **3** aus der Schließstellung nach unten vom Windschutzscheibenrahmen weg in die Offenstellung führen.

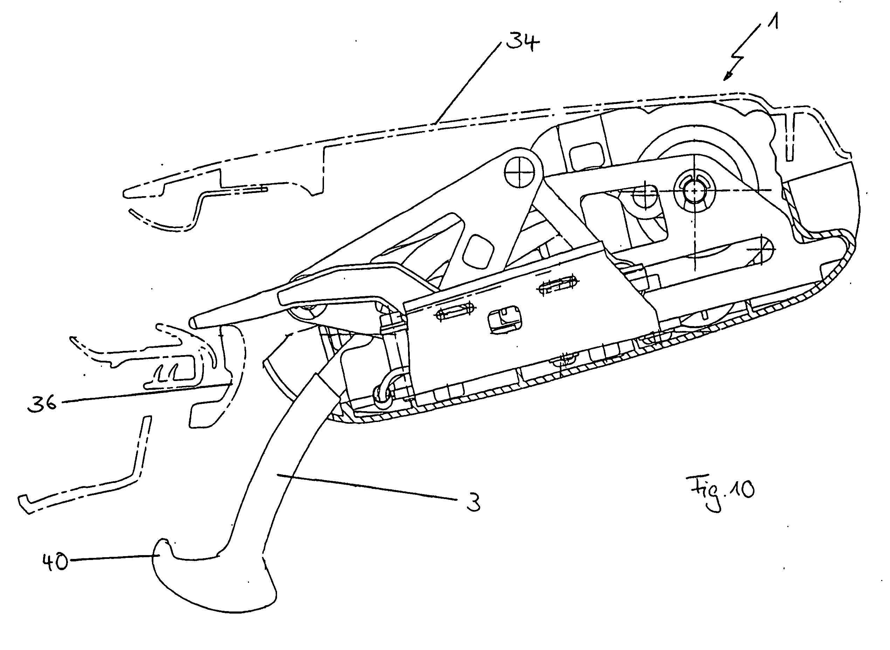

An den Außenseiten des Kulissenblechs **10** ist oberhalb des Verschlusshakens **3** ein Schaltbügel **17** schwenkbar gelagert (Achse **16**), der durch eine Zugfeder **18** nach unten gezogen wird. Beim Bewegen eines vorderen Verdeckabschnitts in die Schließstellung gelangt der Schaltbügel **17** in Kontakt mit einem in der Schließstellung unter dem Schaltbügel **17** liegenden Abschnitt des Windschutzscheibenrahmens und wird entgegen der Federkraft nach oben gedrückt (siehe auch **Fign. 9** und **10**). Der Abschnitt des Windschutzscheibenrahmens wird zwischen dem Schaltbügel **17** und dem Verschlusshaken **3** eingeklemmt.

Der Schaltbügel **17** und der zweite Hebel **12** weisen jeweils einen Absatz **19** bzw. **20** auf, welche jeweils einen an einer Platine **21** angeordneten Mikroschalter **22** bzw. **23** auslösen können, um den Getriebemotor **4** in der Offenstellung bzw. in der Schließstellung abzuschalten. In einer Endstellung des Schaltbügels **17** bzw. des Hebels **12** schlagen die Absätze **19, 20** an den Mikroschaltern **22, 23** an.

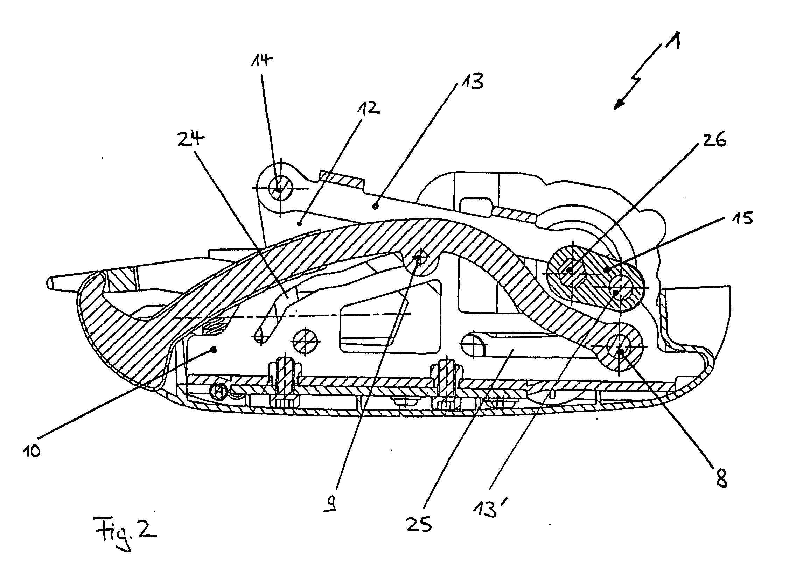

Wie **Fig. 2** zeigt, ist der Verschlusshaken **3** gekrümmt und über den Zylinderstift **9** und den Führungsbolzen **8** in Ausnehmungen **24** und **25** des Kulissenblechs **10** bei seiner Bewegung geführt, so dass daraus eine Bewegung auf einer definierten Bahn resultiert. Der Antriebshebel **15 ist** drehfest auf der Antriebswelle **26** gelagert und über einen Zylinderstift **13' mit** dem Hebel **13** gelenkig verbunden. Daher richtet sich der Antriebshebel **15** bei einer Drehung gegen den Uhrzeigersinn auf, schiebt den ersten Hebel **13** und auch den zweiten Hebel **12** in Richtung Windschutzscheibenrahmen und nimmt dabei auch den Verschlusshaken 3 mit.

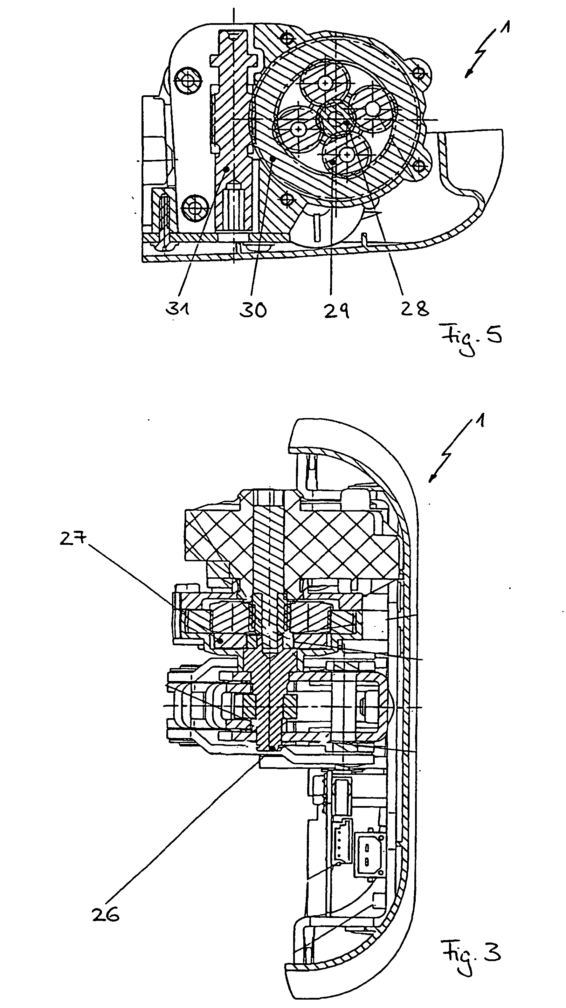

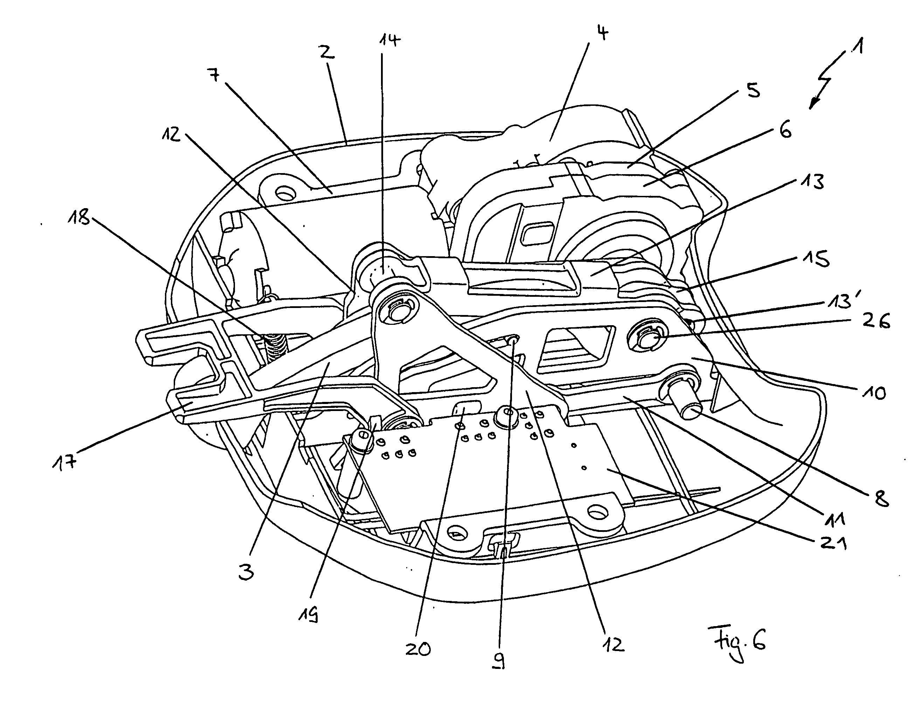

Der Getriebemotor **4** umfasst ein Planetengetriebe (siehe Planetenträger **27**, Sonnenrad **28**, Planetenräder **29**, Hohlrad **30**) und ein Schneckengetriebe **31** zum Antrieb der Antriebswelle **26**, die in den **Fign. 3** und **5** zu erkennen sind. Zur manuellen Betätigung des Verdeckverschlusses **1** an Stelle des Getriebemotors kann das Schneckengetriebe **31** mit einem Werkzeug in Gang gesetzt werden. Das Gehäuse **2** weist eine Klappe oder eine Öffnung auf, um das Werkzeug mit dem Schneckengetriebe **31** in Eingriff zu bringen. Das derart aktivierte Scheckengetriebe **31** führt zur Drehung der Antriebswelle **26**, die folglich auch bei defektem Getriebemotor 4 antreibbar ist, um den Verdeckverschluss zu betätigen.

**Fig. 7** ist die Befestigung des Trägerblechs **7** an dem Verdeckrahmen zu entnehmen. Bohrungen **32** dienen der Aufnahme von Befestigungsmitteln zur Montage des Verdeckverschlusses **1**. Das Gehäuse **2** des Verdeckverschlusses 1 ist in dieser Darstellung der Übersichtlichkeit halber nicht gezeichnet.

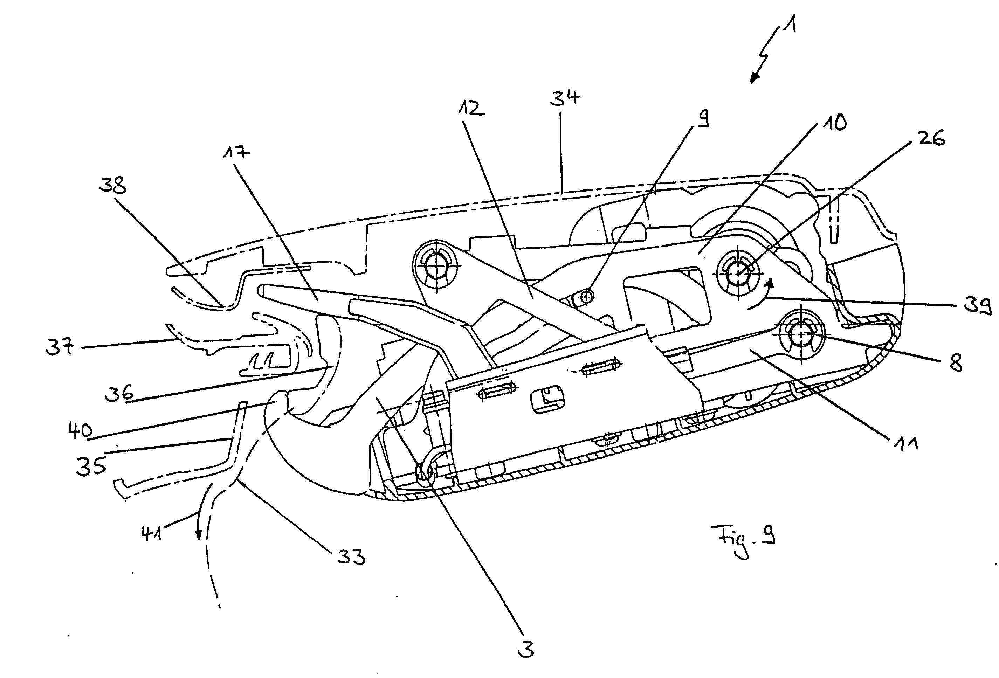

Gemäß **Fig. 8** wird deutlich, dass das Gehäuse **2** die Komponenten des Verdeckverschlusses zum Innenraum des Personenkraftwagens hin abdeckt.

In den **Fig. 9** ist die Bewegung des Verschlusshakens **3** entlang einer Kurve **33** veranschaulicht. Mit gestrichelten Linien sind der Verdeckrahmen **34** und Abschnitte **35, 36, 37** und **38** des Windschutzscheibenrahmens angedeutet. Zum Öffnen des Verdeckverschlusses **1** wird im Innenraum des Personenkraftwagens ein Betätigungsschalter für den Getriebemotor **4** betätigt, so dass die Antriebswelle **26** eine Drehbewegung entgegen dem Uhrzeigersinn in Drehrichtung **39** ausführt. Die Hebel **11** und **12** verschwenken in Richtung Windschutzscheibenrahmen und der ebenfalls bewegte Verschlusshaken **3** bewegt sich entlang der Kurve **33**, weil der Führungsbolzen **8** und der Führungsstift **9** in Kulissenbahnen des Kulissenblechs **10** geführt werden. In Folge entfernt sich eine Fangnase **40** von dem Abschnitt **36** des Windschutzscheibenrahmens bis in die Offenstellung (siehe **Fig. 10**). Der Verschlusshaken **3** liegt nicht mehr am Windschutzscheibenrahmen an, so dass das Verdeck geöffnet werden kann. Zum Schließen des Verdecks führen der Verschlusshaken **3** und die Hebel **11, 12** eine Bewegung und Verschwenkung in Gegenrichtung zur Öffnungsrichtung **41** aus, weil die Antriebswelle **26** im Uhrzeigersinn angetrieben wird.

### BEZUGSZEICHENLISTE

- 1: Verdeckverschluss
- 2: Gehäuse
- 3: Verschlusshaken
- 4: Getriebemotor
- 5: Getriebegehäuse
- 6: Getriebegehäuse
- 7: Trägerblech
- 8: Führungsbolzen
- 9: Führungsstift
- 10: Kulissenblech
- 11: Erster Hebel
- 1 2: Zweiter Hebel
- 13: Dritter Hebel
- 13': Zylinderstift
- 14: Achse
- 15: Antriebshebel
- 16: Achse
- 17: Schaltbügel
- 18: Zugfeder
- 19: Absatz
- 20: Absatz
- 21: Platine
- 22: Mikroschalter
- 23: Mikroschalter
- 24: Ausnehmung
- 25: Ausnehmung
- 26: Antriebswelle
- 27: Planetenträger
- 28: Sonnenrad
- 29: Planetenrad
- 30: Hohlrad
- 31: Schneckengetriebe
- 32: Bohrung
- 33: Kurve
- 34: Verdeckrahmen
- 35: Abschnitt des Windschutzscheibenrahmens
- 36: Abschnitt des Windschutzscheibenrahmens
- 37: Abschnitt des Windschutzscheibenrahmens
- 38: Abschnitt des Windschutzscheibenrahmens
- 39: Drehrichtung
- 40: Fangnase
- 41: Öffnungsrichtung

## Patentansprüche

1. Verdeckverschluss (1) eines Fahrzeugs mit einem Verschlusshaken (3), der in einem - im Querschnitt gesehen vorzugsweise U-förmigen - Kulissenblech (10) über Führungsmittel (8, 9) aus einer Schließstellung in eine Offenstellung auf einer definierten Bahn (41) beweglich angeordnet ist, wobei ein Getriebemotor (4) zum Verschwenken eines Antriebshebel (15) vorgesehen ist, der mit dem Verschlusshaken (3) in Verbindung steht, wobei die Verbindung des Verschlusshakens (3) mit dem Antriebshebel (15) durch mehrere gelenkig miteinander verbundene Hebel (11, 12, 13) ausgebildet ist, **dadurch gekennzeichnet, dass** jeweils zwei erste (11) und zweite Hebel (12) beidseitig des Kulissenblechs (10) angeordnet sind und der eine dritte Hebel (13) zwischen den anderen zwei Hebeln (11, 12) oberhalb des Verschlusshakens (3) angeordnet ist.

2. Verdeckverschluss nach Anspruch 1, **dadurch gekennzeichnet, dass** das Kulissenblech (10) zwei sich im wesentlichen in Längsrichtung des Verschlusshakens (3) erstreckende Ausnehmungen (24, 25) zur Ausbildung von Kulissenbahnen aufweist, deren eine zur Führung des Führungsstiftes (9) und deren andere zur Führung und Lagerung des Führungsbolzens (8) am dem Windschutzscheibenrahmen abgewandten Ende des Verdeckverschlusses (1) vorgesehen ist.

3. Verdeckverschluss nach Anspruch 1 oder 2, **dadurch gekennzeichnet, dass** der erste Hebel (11) seitlich außerhalb des Kulissenblechs (10) angeordnet ist und zum einen mit dem Verschlusshaken (3) und zum anderen mit dem ebenfalls seitlich außerhalb des Kulissenblechs (10) angeordneten zweiten Hebel (12) verbunden ist, wobei der zweite Hebel (12) wiederum über den dritten Hebel (13) mit dem Antriebshebel (15) verbunden ist.

4. Verdeckverschluss nach einem der vorhergehenden Ansprüche, **dadurch gekennzeichnet, dass** die ersten und/oder zweiten Hebel (11, 12) Absätze (19, 20) zur Betätigung vom Mikroschaltern (22, 23) einer Endabschaltung des Verdeckverschlusses in der Offenstellung bzw. in der Schließstellung aufweisen.

5. Verdeckverschluss nach einem der vorhergehenden Ansprüche mit einem Schneckengetriebe (31) des Getriebemotors (4) zum Verschwenken des Antriebshebels (15), **dadurch gekennzeichnet, dass** das Gehäuse (2) des Verdeckverschlusses (1) eine Öffnung zur manuellen Betätigung des Schneckengetriebes (31) mit einem Werkzeug umfasst.

## Claims

1. Latch (1) for a top of a vehicle comprising a latching hock (3) which is disposed in a guide plate (10), preferably having a U-shaped cross-section, to be movable from a closed position into an open position on a defined path (41) via guiding means (8, 9), wherein a geared motor (4) is provided for pivoting an actuation lever (15) which is connected to the latching hock (3), wherein the latching hock (3) is connected to the actuation lever (15) by several levers (11, 12, 13) which are connected to each other in an hinged fashion, **characterized in that** two first (11) and two second levers (12) are each disposed on both sides of the guide plate (10) and the third lever (13) is disposed between the other two levers (11, 12) above the latching hook (3).

2. Latch for a top according to claim 1, **characterized in that** the guide plate (10) has two recesses (24, 25) which extend substantially in the longitudinal direction of the latching hock (3) for forming guide paths one of which is provided for guiding the guiding pin (9) and the other for guiding and bearing the guiding bolt (8) at the end of the latch for a top (1) facing away from the windscreen frame.

3. Latch for a top according to claim 1 or 2, **characterized in that** the first lever (11) is disposed on the side outside of the guide plate (10) and is connected on the one hand to the latching hock (3) and on the other hand to the second lever (12) which is also disposed on the side outside of the guide plate (10), wherein the second lever (12) is again connected to the actuation lever (15) via the third lever (13).

4. Latch for a top according to any one of the preceding claims, **characterized in that** the first and/or second levers (11, 12) have steps (19, 20) for actuating micro switches (22, 23) of a limit stop of the latch for a top in the open position or in the closed position.

5. Latch for a top according to any one of the preceding claims with a worm gear (31) of the geared motor (4) for pivoting the actuation lever (15), **characterized in that** the housing (2) of the latch for a top (1) comprises an opening for manual actuation of the worm gear (31) with a tool.

## Revendications

1. Dispositif de verrouillage de capote (1) d'un véhicule automobile, comportant un crochet de verrouillage (3) qui est agencé avec faculté de déplacement sur une voie définie (41) depuis une position fermée jusque dans une position ouverte via des moyens de guidage (8, 9) dans une tôle de coulisse (10) de section transversale de préférence en forme de U, un motoréducteur (4) étant prévu pour faire pivoter un levier d'entraînement (15) qui est en liaison avec le crochet de verrouillage (3), la liaison du crochet de verrouillage (3) avec le levier d'entraînement (15) étant établie par plusieurs leviers (11, 12, 13) reliés en articulation les uns aux autres, **caractérisé en ce que** deux premiers leviers (11) et deux seconds leviers (12) sont agencés respectivement de part et d'autre de la tôle de coulisse (10) et **en ce qu'**un troisième levier (13) est agencé entre les deux autres leviers (11, 12) au-dessus du crochet de verrouillage (3).

2. Dispositif de verrouillage de capote selon la revendication 1, **caractérisé en ce que** la tôle de coulisse (10) présente deux évidements (24, 25) s'étendant sensiblement en direction longitudinale du crochet de verrouillage (3) et destinés à réaliser des voies de coulisse dont l'une est prévue pour guider la tige de guidage (9) et dont l'autre est prévue pour le guidage et le montage du goujon de guidage (8) à l'extrémité du dispositif de verrouillage de capote (1) détournée du cadre du pare-brise.

3. Dispositif de verrouillage de capote selon l'une ou l'autre des revendications 1 et 2, **caractérisé en ce que** le premier levier (11) est agencé latéralement à l'extérieur de la tôle de coulisse (10) et est relié d'une part au crochet de verrouillage (3) et d'autre part au second levier (12) agencé également latéralement à l'extérieur de la tôle de coulisse (10), le second levier (12) étant relié à son tour au levier d'entraînement (15) via le troisième levier (13).

4. Dispositif de verrouillage de capote selon l'une des revendications précédentes, **caractérisé en ce que** le premier et/ou le second levier (11, 12) comporte(nt) des talons (19, 20) pour actionner des micro-interrupteurs (22, 23) d'une coupure finale du dispositif de verrouillage de capote dans la position ouverte ou dans la position fermée.

5. Dispositif de verrouillage de capote selon l'une des revendications précédentes, dans lequel le motoréducteur (4) pour faire pivoter le levier d'entraînement (15) comporte une transmission à vis sans fin (31), **caractérisé en ce que** le boîtier (2) du dispositif de verrouillage de capote (1) présente une ouverture pour l'actionnement manuel de la transmission à vis sans fin (31) au moyen d'un outil.
